# EUROPEAN PATENT APPLICATION

(11) **EP 2 015 330 A2**
(43) Date of publication of application: **14.01.2009**
(21) Application number: 08011994.4
(22) Date of filing: 03.07.2008
(51) Int. Cl.: H01H 25/00, H01H 9/18, G06F 3/048

(54) **Switch with a display capable of tree-type searching by a single unit**

(30) Priority: 09.07.2007 JP 2007179259; 27.11.2007 JP 2007305691
(71) Applicant: Nihon Kaiheiki Industrial Company, Ltd., Kawasaki-shi Kanagawa 213-8553 (JP)
(72) Inventor: Nagase, Etsushi, Nihon Kaiheiki Industrial Company, Ltd., Kawasaki-shi, kanagawa 213-8553 (JP); Suzuki, Naotaka, Nihon Kaiheiki Industrial Company, Ltd., Kawasaki-shi, kanagawa 213-8553 (JP); Aoyama, Masahiro, Nihon Kaiheiki Industrial Company, Ltd., Kawasaki-shi, kanagawa 213-8553 (JP); Sato, Masashi, Nihon Kaiheiki Industrial Company, Ltd., Kawasaki-shi, kanagawa 213-8553 (JP)
(74) Representative: Fiener, Josef

(57) **Abstract**

A switch with a display capable of tree-type searching by a single unit, which enables easy operation, cost reduction and space saving, is provided. The switch with a display capable of tree-type searching by a single unit comprises an operational button 6 capable of swinging motion and pushing motion, a switching mechanism activated by the operation of the operational button 6, and display module 10 performing display by the movement of the switching mechanism, and is characterized in that selection of display of the display module 10 is made by swinging motion of the operational button 6, and determination motion to move to the next stage of display of the display module 10 is performed by pushing motion of the operational button 6.

## Description

### BACKGROUND OF THE INVENTION

### 1. Field of the Invention

The present invention relates to a switch with a display capable of tree-type searching by a single unit.

### 2. Description of the Related Art

A conventional switch with a liquid crystal display (See Patent Documents 1 and 2 below) is characterized in capability of tree-type searching in which a display is changed over for every operation. The term "tree" structure herein refers to a data structure where a parent-child relationship exists in the recodes and child recodes have a unique parent recode.

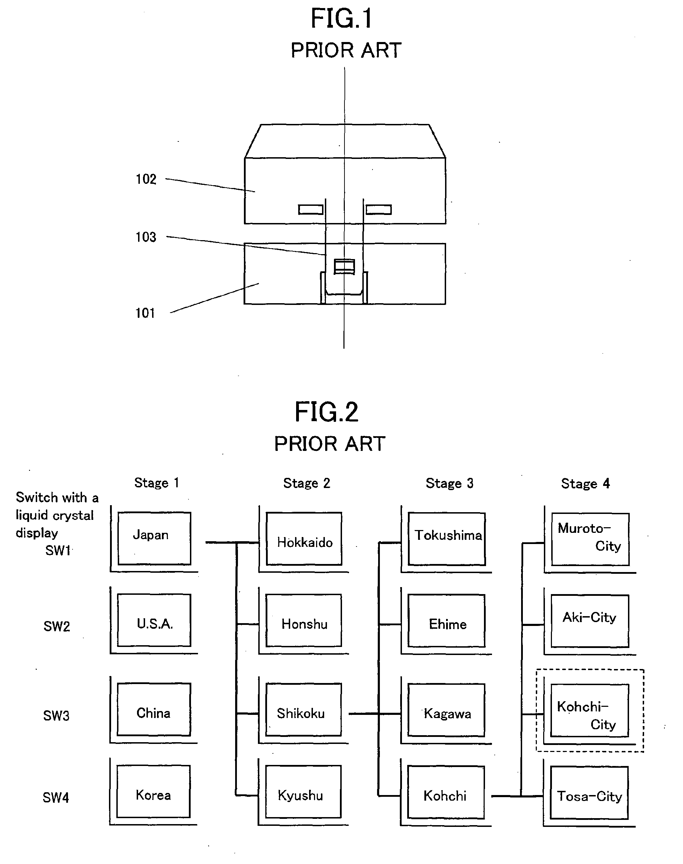

Fig. 1 shows a conventional switch with a liquid crystal display, and Fig. 2 shows an application example of a plurality of the conventional switches with a liquid crystal display.

In Fig. 1, reference numeral 101 represents the body of a switch, 102 represents an operational button, and 103 represents a switching mechanism part.

By selecting any one of four switches with a liquid crystal display and pushing the operational button 102, the display is moved to the next stage, as shown in Fig. 2. By repeating this procedure, searching according to the aim can be executed.
[Patent Document 1] Japanese Patent Application Publication No. 2005-216673
[Patent Document 2] Japanese Patent Application Publication No. 2005-216674

As described above, the conventional switch with a liquid crystal display is characterized in capability of tree-type searching where the display is changed over for every operation. However, the tree-type searching was not possible by a single unit, and therefore performing the tree-type searching required to use a plurality of switches with a liquid crystal display or to combine with another switch for selection, thereby resulting in cumbersome operation and increasing cost and space.

By taking account of the situation described above, the object of the present invention is to provide a switch with a display capable of tree-type searching by a single unit which is easy to operate and capable of reducing cost and saving space.

### SUMMARY OF THE INVENTION

In order to accomplish the aim described above, the present invention provides;
[1] A switch with a display capable of tree-type searching by a single unit comprising an operational button capable of swinging motion and pushing motion, a switching mechanism activated by the operation of the operational button, and a display module performing display by the movement of the switching mechanism, wherein a selection of display of the display module is made by swinging motion of the operational button, and a determination motion to move to the next stage of display of the display module is performed by pushing motion of the operational button.
[2] The switch with a display capable of tree-type searching by a single unit described in the above [1], wherein the display of the display module goes forward by selecting one of the two swinging motions, and the display of the display module goes backward by selecting the other of the two swinging motions.

### BRIEF DESCRIPTION OF THE DRAWINGS

Fig. 1 shows a conventional switch with a liquid crystal display.
Fig. 2 shows an application example of a plurality of the conventional switches with a liquid crystal display.
Fig. 3 shows a configuration diagram of a switch with a liquid crystal display capable of tree-type searching by a single unit according to the present invention.
Fig. 4 shows a case of a selection operation of the switch with a liquid crystal display capable of tree-type searching by a single unit according to the present invention.
Fig. 5 shows a case of a determination operation of the switch with a liquid crystal display capable of tree-type searching by a single unit according to the present invention.
Fig. 6 shows an example of tree-type searching using the switch with a liquid crystal display capable of tree-type searching by a single unit according to the present invention.

### DESCRIPTION OF THE PREFERRED EMBODIMENTS

A switch with a display capable of tree-type searching by a single unit according to the present invention comprises an operational button capable of swinging motion and pushing motion, a switching mechanism activated by the operation of the operational button, and a display module performing display by the movement of the switching mechanism, wherein a selection of display of the display module is made by swinging motion of the operational button, and a determination motion to move to the next stage of display of the display module is performed by pushing motion of the operational button.

### Embodiments

Embodiments of the present invention are now described in the following.

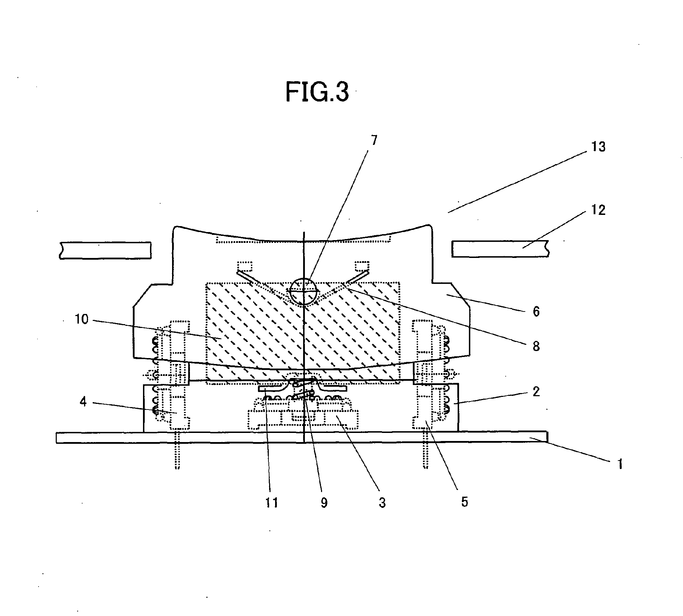

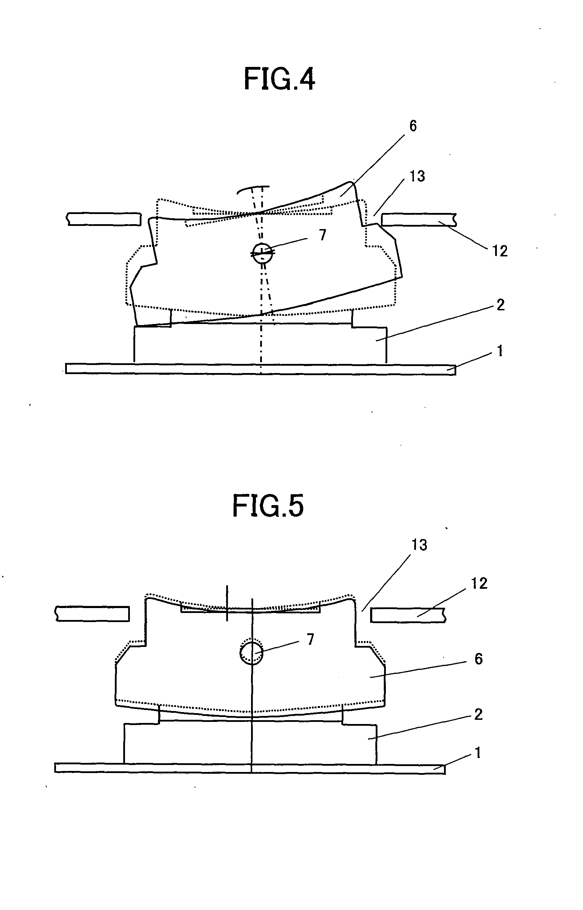

Fig. 3 shows a configuration diagram of a switch with a liquid crystal display capable of tree-type searching by a single unit according to the present invention, Fig. 4 shows a case of a selection operation of the switch with a liquid crystal display capable of tree-type searching by a single unit, and Fig. 5 shows a case of a determination operation of the switch with a liquid crystal display capable of tree-type searching by a single unit.

First in Fig. 3, reference numeral 1 represents a print board, 2 represents a base part having a pushing switch (tactile switch) 3 located in a lower part of the center of the switch, 4 and 5 represent pushing switches (tactile switches) located on both sides of the switch, 6 represents an operational button capable of swinging (selection) motion and pushing (determination) motion, 7 represents a support spindle of the operational button 6, 8 represents a twisted coil spring wound around the support spindle 7 of the operational button 6, and 9 represents a coil spring of the operational button 6. The support spindle 7 of the operational button 6 is capable of swinging so as to enable the swinging (selection) motion of the operational button 6, and also capable of moving in up and down direction along a guide hole (not shown), located in the fixed part of the switch, which is long in the up and down direction engaging to the spindle 7 of the operational button 6 so as to enable pushing (determination) motion of the operational button 6. The stroke of the support spindle 7 is ensured by a coil spring 9. Also the twisted coil spring 8 is configured so that the position of the operational button 6 can return to its home position as shown in Fig. 3 after releasing of the selection operation by the operational button 6. 10 represents a liquid crystal display module configured within the center of the switch, and capable of displaying characters and figures in a window opened in the operational button 6 so as to enable tree-type searching by a single unit, as will be described below.

A working plate 11 is located below the operational button 6. 12 represents a panel having a window 13 in which the top surface of the operational button 6 is configured.

Then the operation of the switch with a liquid crystal display capable of tree-type searching by a single unit is now described.

In Fig. 4, when a swinging motion (selection) is performed by operating the left side of the operational button 6 during a tree-type searching, the operational button 6 rotates in anti-clockwise direction around the support spindle 7 to activate the pushing switch (tactile switch) 4 (See Fig. 3), thereby performing a selection of the liquid crystal display during the tree-type searching. Furthermore, as shown in Fig. 5, when a pushing motion (determination) is performed by operating the central part of the operational button 6 during the tree-type searching, the operational button 6 moves downward through the guide hole (not shown), located in the fixed part of the switch, which is long in the up and down direction so as to enable the working plate 11 (See Fig. 3) to activate the pushing switch (tactile switch) 3 (See Fig. 3) located in the center of the base part 2, thereby performing a determination of the liquid crystal display during the tree-type searching.

In the following, an example of a tree-type searching using the switch with a liquid crystal display capable of tree-type searching by a single unit will be described.

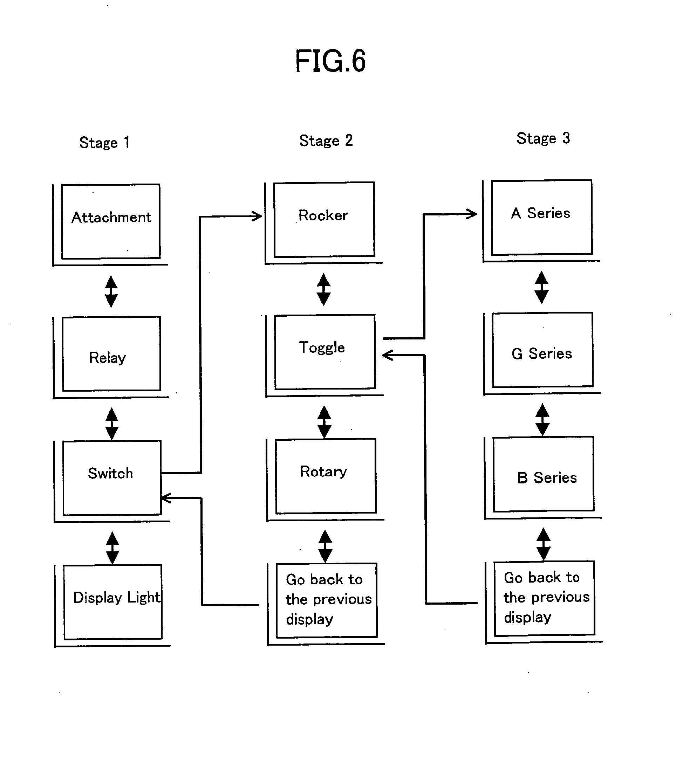

Fig. 6 shows an example of a tree-type searching using the switch with a liquid crystal display capable of tree-type searching by a single unit according to the present invention.

In a stage 1, when a swinging motion (selection) is performed on the left side of the operational button 6 in the switch with a liquid crystal display now displaying as "attachment", the display changes to "relay". Furthermore, every time a swinging motion (selection) is performed on the left hand side of the operational button 6, the display changes sequentially to "switch" and then "display light". Then, when a swinging (selection) motion is performed on the right side of the operational button 6, the display changes to "switch".
Furthermore, every time a swinging (selection) motion is performed on the right side of the operational button 6, the display changes sequentially to "relay" and then "attachment". In other words, by the swinging (selection) motion on the left side of the operational button 6, the display can be changed to go forward and by the swinging motion (selection) on the right hand side of the operational button 6, the display can be returned backward.

By pushing the central part of the operational button 6 now showing "switch" on the display in the stage 1, determination motion is performed and then the display is moved to a stage 2. Also in the stage 2, every time a swinging (selection) motion is performed on the left side of the operational button 6, "rocker", "toggle" or "rotary", which indicates an operation mode of the "switch", is displayed. When going furthermore, the display shows "going back to the previous display", and when a determination motion is performed then, display goes back to the stage 1. Similarly, when "toggle" is displayed in the stage 2, for example, pushing the central part of the operational button 6 to perform a determination motion advances the display to a stage 3. In the stage 3, "A series", "G series", and "B series" which indicate product groups of the toggle switches are sequentially displayed by operating the operational button 6, and furthermore "going back to the previous display" is displayed. Then by pushing the central part of the operational button 6 to perform a determination motion, returning back to the stage 2 can be realized.

In the above embodiment, a switch with a liquid crystal display is described, but it may comprise a switch with a display such as shown in the following;
(1) a switch with a display having an organic light emitting display device (organic light emitting diode panel). In this case the display can increase the viewing angle, and does not need a backlight, thereby improving in structural simplification and energy saving.
(2) a switch with a display having a plasma display device. In this case, a clear display is obtainable.

In this way, by selection motion, the switch with a display can change the display in both directions, and by determination motion, the switch with a display can move to the next stage. By repeating this procedure, searching in accordance with the aim can be performed.

According to the present invention, the following advantages can be obtained.
(1) A switch with composite operation can be realized, which combines swinging (selection) motion (wave-shape operation) and pushing (determination) motion (push button operation).
(2) In the swinging motion (wave-shape operation) during a selection process, a stroke is ensured by the twisted coil spring, and a reliable feeling of click can be realized by locating the pushing switch (tactile switch) on the side.
(3) In the pushing motion (push button operation) during a determination process, a stroke which is longer than in the conventional pushing switch (tactile switch) can be ensured by combining a pushing switch (tactile switch) having heavier operation weight with a twisted coil spring.
(4) By setting the direction of the selection operation [swinging motion (wave-shape operation)] different from the direction of the determination operation [pushing motion (push button operation)], malfunction can be prevented.
(5) A designed button which takes into account operational easiness can be provided.

The present invention is not limited to the above-described embodiment and various modifications can be made without departing from the scope of the invention. These modifications shall not be excluded from the scope of the invention.

According to the present invention, tree-type searching in accordance with an aim can be simply performed with a single switch with a display.

### Industrial Applicability

The switch with a display capable of tree-type searching by a single unit according to the present invention can be used as a switch with a display capable of tree-type searching by a single unit, which is easy in operation, and capable of reducing cost and saving space.

## Claims

1. A switch with a display capable of tree-type searching by a single unit comprising;
(a) an operational button capable of swinging motion and pushing motion,
(b) a switching mechanism activated by an operation of the operational button,
(c) a display module performing display by a movement of the switching mechanism, and
(d) means for making a selection of display of the display module by swinging motion of the operational button, and performing a determination motion to move to the next stage of display of the display module by pushing motion of the operational button.

2. The switch with a display capable of tree-type searching by a single unit according to Claim 1, wherein the display of the display module goes forward by selecting one of the two swinging motions, and the display of the display module goes backward by selecting the other of the two swinging motions.
